# EUROPEAN PATENT APPLICATION

(11) **EP 3 419 284 A1**
(43) Date of publication of application: **26.12.2018**
(21) Application number: 17177083.7
(22) Date of filing: 21.06.2017
(51) Int. Cl.: H04N 7/18, H04N 5/232, H04N 5/247

(54) **SYSTEM AND METHOD FOR TRACKING MOVING OBJECTS IN A SCENE**

(71) Applicant: Axis AB, 223 69 Lund (SE)
(72) Inventor: Gumpert, Jakob, 223 69 LUND (SE); Persson, Leif, 223 69 Lund (SE); Dahlström, Robin, 223 69 LUND (SE); Gylin, Mattias, 223 69 LUND (SE)
(74) Representative: AWA Sweden AB

(57) **Abstract**

The invention relates to system for tracking moving objects in a scene, comprising a first overview unit arranged to capture a first overview of a first portion of a scene, a second overview unit arranged to capture a second overview of a second portion of a scene, wherein the first portion and the second portion may be partly overlapping. The device further comprises a PT-camera, able to pan/tilt, so as to image selected objects in the first or second portion of the scene, wherein the first and the second overview unit are configured to detect and locate moving objects in the scene, and to transmit object data of said moving objects to a control unit, said object data at least including a position of each object. The control unit is configured to receive object data concerning at least two objects present in the scene,to transform portions of the object data, and to, from the transformed portion of object data, generate a list of pan, tilt positions for the PT-camera, each item in the list corresponding to a position of at least one of said at least two objects in the scene, in a coordinate system of the PT-camera, and furthermore to control the PT-camera to image each item of the list in a specific order.

## Description

### Technical field

The present invention relates to a system for tracking moving objects in a scene, and to a method for performing said tracking.

### Background

Monitoring cameras are commonly used to monitor buildings, roads, shops and various other scenarios. In particular, monitoring cameras are often used to monitor scenes to allow automatic detection or tracking of events in the form of presence of motion or presence of an object of a specific type. Such monitoring cameras can be used both indoors and outdoors.

Closing in on the context of the present invention there are camera arrangements consisting of one or more fixedly arranged cameras having a wide field of view and a pan-tilt-zoom camera (PTZ-camera) enabling a narrow field of view (with elevated zoom). When using such camera arrangement an operator may use the fixedly arranged cameras as an input for an overview image, and subsequently utilize the PTZ-camera to obtain a detailed view of an object located in the overview image (i.e. located in the imaged scene). A user may click on a position of an object in an overview image whereby the PTZ-camera is moved to that particular position. By defining a position and a size (e.g. by click and drag) the desired pan position, tilt position and zoom setting for the PTZ-camera may be specified already in the overview image. Such a system is disclosed in US 2013/0162838.

The operation of a system having the above described functionality requires a transformation from coordinates of an overview image (which may comprise views of several cameras) to pan, tilt, and zoom parameters for the PTZ-camera. The calibration may be performed automatically or manually, and the result may be a system where information from an overview image, typically acquired by a statically arranged camera, may be used to control a movable camera, typically a PTZ-camera. An early disclosure of such a system is found in US5434617.

In an installation where the PTZ-camera is automatically guided to an object detected by the overview cameras there may be an issue as soon as a second object enters the overview scene in that some selection would have to be made; e.g. maintain the view of the first object as a default, shift to the second object as a default.

The present invention relates to improvements in this technical field, in particular when tracking two or more objects detected by more than one overview camera or other type of overview unit.

### Summary of the invention

In view of the above, it is thus an object of the present invention to provide an efficient and reliable support when tracking two or more objects. According to the invention this may be provided by a system for tracking moving objects in a scene, comprising a first overview unit arranged to capture a first overview of a first portion of a scene and a second overview unit arranged to capture a second overview of a second portion of the scene. The first portion and the second portion may be partly overlapping, and the system further comprises a PT-camera, able to pan/tilt, so as to image selected objects in the first or second portion of the scene. The first and the second overview unit are configured to detect and locate moving objects in the scene, and to transmit object data of said moving objects to a control unit, said object data at least including a position of each object. The invention is characterized in that the control unit is configured to receive object data concerning at least two objects present in the scene, to transform portions of the object data into a reference system of the PT-camera, and from the transformed portion of object data; to generate a list of pan/tilt positions for the PT-camera, each item in the list corresponding to a position of at least one of said at least two objects in the scene, in a coordinate system of the PT-camera, and to control the PT-camera to image each item of the list in a specific order.

By use of the present invention, embodied as a device in accordance with the above description or embodied as a method, the surveillance of complex scenes is greatly simplified, and full advantage is taken of the technical performance of modern monitoring cameras.

In most embodiments the PT-camera is a PTZ-camera having a zoom capability, enabling optical zoom, and in these embodiments the generated list also includes a zoom level. This feature further improves the user experience and the applicability of the device, e.g. in that larger areas may be imaged with the same device while still maintaining an adequate image quality.

In one or more embodiments the object data further may comprise measure of object size, such as to enable filtering, prioritization, automatic setting of zoom level, etc.

In one or several embodiments the object data may comprise a measure of object velocity or of object position as a function of time, and wherein the control unit is configured to utilize the data to extrapolate a position for the object, which makes it possible for the control unit of the PTZ-camera (or PT-camera) to predict a future position and thereby to move the camera to that position ahead of time. This will result in a smoother tracking of the object. The PTZ-camera may also be instructed to move in accordance with a specified velocity vector when following the object. In any embodiment, there may be a feedback from the PT/PTZ-camera so that the control unit is aware of the current settings (pan/tilt position, zoom level, etc) of the PT/PTZ-camera so as to enable even smoother tracking of objects and transitions between objects.

In more than one embodiment the object data also includes further attributes of the detected object, the attributes comprising: object class, object subclass, object tracking identity, and combinations thereof, the combination of which enabling an identification of the object and in further embodiments it enables assigning a priority setting to the object as well. The priority setting may be used when determining in what order and during what time each object should be visited (i.e. imaged by the PT/PTZ-camera).

In any embodiment, the object data may be used as input to determine if two or more detected objects may be imaged using a single view of the PT-camera, and to define a superobject including said two or more objects, and to add said superobject as one item in the list. The use of superobjects may introduce a further improvement in particular in complex scenes.

In one or more embodiments, the control unit utilizes a minimum zoom level or a user defined zoom level when determining if the objects may be imaged in a single view. Minimum zoom level corresponds to the widest field of view possible to cover with the PTZ-camera. If objects are further apart it is not possible to cover them in a single PTZ-view. In some embodiments, it may not be desirable to use the minimum zoom level, and then the user may define a zoom level that should constitute a lower limit. One reason could be that individuals should be depicted in the video images with enough pixels to be identified, number plates should be depicted in the video images with enough pixels to be read, etc.

A center point of such superobject may in one or more embodiments be defined as a combined geometrical center of the objects. If the superobject is defined as the size of the smallest rectangle being able to circumvent all objects included in the superobject, the center point will be the center of the rectangle. This conveniently results in that if the pan position and tilt position of the PTZ-camera is set to direct it to the center point the zoom level will be optimal for that superobject, "optimal" implying that it will be zoomed in as much as possible while still including all objects, i.e. the whole superobject in its field of view but not much more than that.

In some embodiments the first overview unit and the second overview unit may continuously transmit positional data to the control unit, so that the control unit may continuously adjust pan, tilt and zoom settings of the PTZ-camera. Such an approach will enable the control unit to stay up to date with any development in the imaged scene and update the pan, tilt, and zoom (when available) positions in the guard tour list accordingly. While typical image framerates could be 60 frames per second (fps) or 30 fps the control unit would not necessarily have to update the position of the PTZ-camera as often. Examples include the actual framerate, but also other frequencies such as 20 Hz, 15 Hz, 10 Hz, or 5 Hz, the latter two being a typical rate for updating an object detection algorithm. Notably, as long as an individual object ID is maintained at the overview camera, the list generated in the control unit may be continuously updated with object data for detected objects with maintained continuity.

In embodiments comprising a superobject a priority setting for the superobject is based on the priority setting of the objects contained therein, i.e. based on object position, object velocity, object size, object type, object class, a time duration since detection, or a combination thereof, for the objects contained therein, and wherein each superobject is defined as an individual item in the list of the PTZ-camera. Treating a group of several objects as superobject enables an efficient guard tour with a minimum number of stops (the number of times the PT/PTZ-camera rests on an object). Using the priority settings of the objects contained in the superobject to determine a priority setting for the superobject enables full use of the algorithms and prioritizations already used for single objects. From a use perspective, it may be preferable to use the highest priority setting of the objects contained in the superobject as the priority setting for the superobject.

It is preferred that an overview unit corresponds to an overview camera, yet the present disclosure does not exclude that radar units or LIDAR units could be used instead. Radar and LIDAR devices are versatile positioning devices which may detect positions and velocities of objects in a scene with proven reliability, further the strength of the reflected signal, detected at these devices, may be used for object classification related to the size of the detected objects. These devices are not prone to false object detections due to lighting artefacts, like e.g. shadows, in the scene which is the case for many monitoring systems based on video analysis, which in turn result in advantages that makes them a viable alternative. When the overview unit is an overview camera, the camera may be a thermal camera, an IR camera, a visual camera (a camera having a spectral response in the visual wavelength range), or a combination thereof. These options may also exist for the PTZ-camera. Furthermore, it is preferred (or almost a prerequisite due to the tracking functionality) that the cameras are video cameras providing a stream of image frames, and that the video cameras are digital IP cameras.

According to another aspect of the present invention it relates to a method for tracking moving objects in a scene with a system comprising a first and a second overview unit and a PT camera. The method comprises detecting and locating a first object with the first or the second overview unit and a second object with the first or second overview unit. This step is followed by transmitting object data of the detected objects from the first and/or the second overview unit to a control unit. In the control unit, a portion of the object data is transformed from the coordinate system of the overview unit to the coordinate system of the PT camera, and a list is generated from the transformed object data, the list comprising positional data for detected objects, in the coordinate system of the PT camera. The method further comprises controlling the PT camera to image each item in the list in a specific order.

In one or more embodiments the first object is detected with the first overview unit and the second object is detected with the second overview unit.

The inventive method results in the same advantages as the inventive device, and the method may in further embodiments be configured in the corresponding way as the inventive device. To this end, the inventive method may comprise a step of assign a priority setting to each detected object, or a step of defining a superobject of a group of detected objects and to assign a priority setting to the superobject. The priority setting may be based on measurable parameters of the detected object combined with a user-defined priority profile, as discussed in the detailed description.

### Brief Description of the drawings

The invention will now be described in more detail by way of example and with reference to the accompanying schematic drawings, in which:
Fig.1 illustrates schematically an overview comprising views from two overview cameras.
Fig. 2 illustrates a system comprising two overview cameras and one PTZ-camera.
Figs. 3A and 3B are close-up views of Fig. 1, as imaged by the PTZ-camera.
Figs. 4A-D are a sequence of views illustrating the evolution of superobjects.
Fig. 5 is a flowchart illustrating a method according to one embodiment of the present invention.

### Detailed description of embodiments

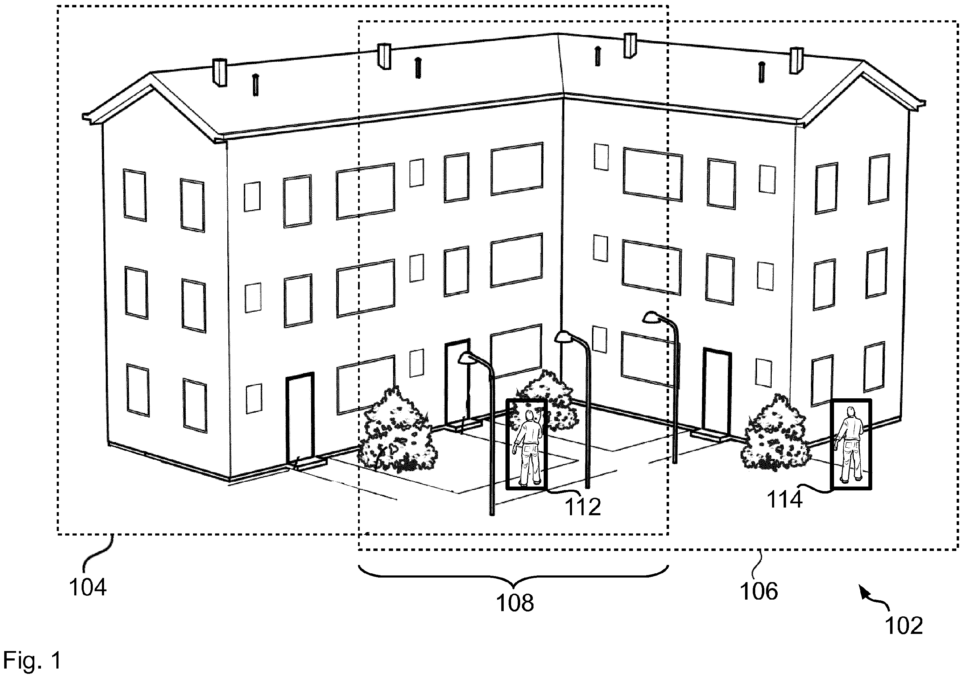

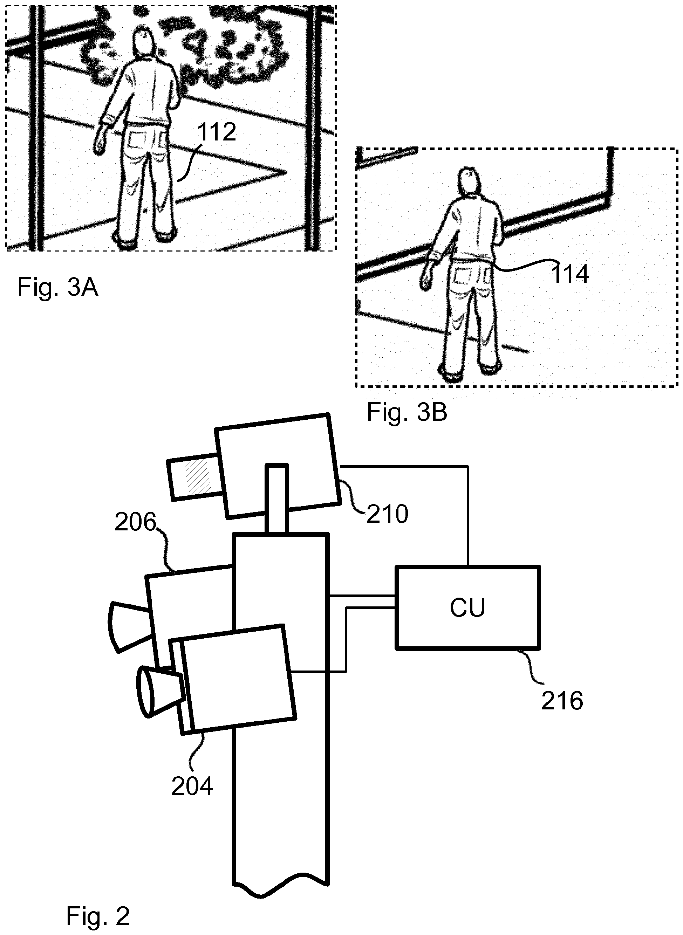

Fig. 1 illustrates an overview 102 of a scene. The overview 102 is a composite image comprising image data from two or more overview cameras 204, 206, shown in Fig. 2. The composite feature is illustrated by the two dotted rectangles 104, 106, each representing the view from one overview camera (204 and 206, respectively) and in particular in how they overlap in an area 108. The size of the overlap area 108 (an area imaged by more than one camera) may vary between a large overlap and no overlap, or essentially no overlap. In the overlap area image data from each camera may be blended, or one may use image data from a single camera only, if the composition image is to be shown to a user. The combination is often referred to as "blending" or "stitching", yet since it is not the focus of the present application - the present invention does not rely on such combination taking place - it will not be mentioned any further. Within the context of the present invention overlap is not necessary, and in other embodiments the views do not necessarily need to be combined, they can instead be displayed to an operator as two separate video streams viewed in two separate viewing windows. The two or more overview cameras 204, 206 are included in a system 200 also comprising a PTZ-camera 210, and each of the overview cameras 206, 204 have a field of view being wider than the minimum field of view accomplishable with the PTZ-camera 210. Furthermore, the PTZ-camera has an optical zoom ability enabling zooming in to achieve greater optical magnification than what is possible with the overview cameras 204, 206, and zooming out to dynamically adjust to changes in the scene.

The overview cameras may preferably be digital monitoring cameras having a fixed focal length and a fixed field of view of a scene.

The purpose of the combination of cameras included in the system of Fig. 2 is to enable for an operator to acquire an overview of an area to be surveilled (with the aid of the overview cameras 204, 206) while also enabling for the operator to acquire a detailed, close-up view of an object or area within the area to be surveilled (with the aid of the PTZ-camera 210).

Furthermore, the overview cameras may be used to digitally track objects in the scene, which may mean that an object-detection algorithm is used to find and track areas of motion (objects) in a video stream, i.e. between consecutive images, or to detect objects by detecting distinguishable features. Parameters extracted during tracking may be added to the object data. The detected object may be marked with the commonly known rectangles, polygons or bounding boxes, indicating boundaries or geometrical center points of the object in motion. This is indicated by the two individuals defined by rectangles 112, 114 in Fig. 1. A digital zoom may be used to extract an electronically zoomed portion of the overview image, yet for higher-quality imaging the PTZ-camera 210 would be used as a preference. The PTZ-camera 210 includes a PT-motor enabling automated (or user controlled) pan motion and tilt motion, as well as a zoom motor enabling automatic (or user controlled) optical zoom.

The system further comprises a control unit 216 for enabling control of the system. A control unit may be embodied in several different ways, and the hardware may be arranged in several different locations, yet the functional feature for the purposes of the present invention is to receive data from the overview cameras and to output data for control of the PTZ-camera. In Fig. 2 the control unit is illustrated as a separate device, and it may be indeed arranged in such a way, yet it may also form part of a processing unit of one of the cameras 204, 206, 210, or be arranged remotely from the camera arrangement, such as integrated in a video management server. In most embodiments disclosed the PTZ-camera is arranged in close proximity of the overview cameras, even in the same arrangement. This enables for a position in the view of the overview camera to be readily translated to a pan position and a tilt position in the coordinate system of the PTZ-camera using calibration data obtained for the arrangement. Such an arrangement also allows the PTZ-camera to observe essentially everything detected by the overview cameras, without any particular effort. Arranging the PTZ-camera remotely from the overview cameras results in a more complex situation since a more careful calibration would have to be performed. In other embodiments the overview cameras may be replaced by radar units, LIDAR units, or other units that could readily output an absolute position of an object, absolute in relation to a common coordinate system (such as a geographical coordinate). If so, the PTZ-camera may be positioned more freely, at a remote position from the overview units (overview cameras, radar units, LIDAR units, etc). For that reason the term "overview unit" is hereby introduced, and although "overview camera" is used throughout most of the descriptions, it should be readily appreciated that other types of overview units may be used instead or even as a complement, and that the embodiments referring to an overview camera may utilize another type of overview unit instead. When using an overview unit other than an overview camera, the size of an object may be more difficult to access. As an example, the radar response from a person will vary greatly depending on the position of the person in relation to the radar, if the individual is facing the radar or displaying a side thereto. Therefore, if size is of importance, other analytic functions may have to be added, such as object identification based on motion pattern (which may be scene dependent), velocity, etc., which may be supported by visual confirmation (automatic or manual) using the PTZ-camera.

For the purposes of disclosure, the control unit may also be embodied in the form of a program on a computer or as an application (mobile app, application software, Web application, etc.).

Thus far the description essentially describes well-known art, and in the following features specific for the present invention according to some embodiments thereof will be disclosed. Each of the overview cameras 204, 206, or at least a control unit thereof, comprises an object-detection algorithm enabling detection of objects 112, 114 in their views 104, 106. The object-detection algorithm may comprise an object-classification algorithm enabling determination of a class of a particular object (car, human, bike, dog, etc). Typically these algorithms are separate algorithms, so that further analysis such as object classification, object recognition etc. only is performed on an image crop containing the detected object, rather than on the entire imaged view. The object detection algorithm may also merely detect objects in motion, e.g. as disclosed in US8121424 by the present applicant. An output from the object detection algorithm may be data concerning the object, such as position, estimated size, pixel velocity, object class and a bounding box or polygon coordinates for the detected object in the view, etc, and the output may be forwarded to the control unit 216.

The control unit 216 may in turn translate the data (when applicable) to the coordinate system of the PTZ-camera and automatically guide the PTZ-camera 210 to the correct position, enabling a close-up view of one or more detected objects, and the size data (which may correspond to the size of the bounding box or polygon, or a more refined size measure) to enable use of a suitable zoom setting. The control unit may also combine the data to generate more information, one example being that the current position of an object (e.g. when compensating for delay in data transfer, calculations and control of a PTZ-camera) may be estimated by extrapolation, by using the latest positional data for the object, combined with the latest velocity data. In this way, a PTZ-camera may be guided to a position in advance. Interpolations may also be used to generate more positional data. The result is that the PTZ-camera may be used to obtain a close-up view of the detected objects, as shown in Fig. 3A and Fig. 3B.

A situation where it is not possible to cover both detected objects in a single view of the PTZ-camera will be disclosed in the following, referring to Fig. 1. According to this first embodiment the control unit 216 is configured to receive at least positional data concerning a first and a second object, 112 and 114, respectively. Based on the positional data, as translated into the coordinate system of the PTZ-camera, the control unit is configured to list the detected objects and to set up a guard tour for the PTZ-camera and to instruct the PTZ-camera to move accordingly. This means that the PTZ-camera moves to the first object, maintains the view of the first object for a set period of time, after which it moves to the second object and maintains the view of the second object for a set period of time. This movement pattern may then be repeated.

In this context it may be appropriate to mention that the generation of the list may not necessarily set the executed order of the guard tour if the number of objects are greater than two. As an example, if there are three objects the first object may have a higher priority than the second and third. A consequence may be that the first object is shown a longer time (which would maintain the order of the list) or more often (which would disrupt the order of the list) than the other two. The latter could result in that the first object is shown every other time, i.e. first the first object is shown, then the second, then the first again, then the third, then the first, and so on. "Shown" and "showed" corresponds to the PTZ-camera having zoomed in on the object in question. Another variation on the same theme is that even though there are several detected objects in the scene, one single object (or superobject) may have a priority such that the other objects are disregarded by the PTZ-camera. A concrete example could be a road tunnel entrance, where cars could be disregarded completely if a pedestrian appears near the tunnel entrance.

A priority setting for an individual object will be an input when creating the list, and it may be based on any measurable parameters. Typical parameters would concern features like the object class, such as car/person/bicycle/etc, and for a particular surveillance scenario different classes may have different priorities. The parameters could also include object subclass, such as "number plate", "van" (subclasses to "car" or "vehicle") or detectable attributes, such as color. A usable object parameter is the object size, since an estimation of the size is an output of several tracking engines it is a convenient parameter to use and in its use it borders to the "object class". Notably, object size may mean different things. In a first approach it correspond to a measure of the pixels occupied by the object or the bounding box related to the object, whereas a transformation to actual size is possible but would require more information about the imaging situation, or a calibration. Other parameters coming from a tracking algorithm is the object identity (object ID), e.g. the tracking identity given to the object when it is first detected by an overview camera and the object position. The object ID is used to maintain continuity in that the control unit will update an existing object rather than creating a new object in each update from the overview cameras. Returning to the example of Fig. 1 the control unit will receive object data related to three object ID:s: The first object ID is 104:112 (object 112 in view 104), the second is 106:114 (object 114 in view 106) and the third is 106:112 (object 112 in view 106). Each object ID received by the control unit in association with other data relating to the object, but at least the position thereof in the coordinate system of the overview camera in question. As the control unit transforms the positional data to the coordinate system of the PTZ-camera it may either conclude that object ID 104:112 and object ID 106:112 refers to the same object and disregard one, alternatively it may define the two object ID:s as a single superobject, as "they" may be imaged with the same view of the PTZ-camera. Either way, although there are two object ID:s for a single object it will not occupy more than one position in a guard list.

Once the object ID is generated the control unit will receive updates concerning the corresponding object data (position, velocity, size, etc) which will impact the guard tour. The PTZ-camera of any embodiment may therefore merely receive and execute instructions concerning where it should go next (pan/tilt position), at what velocity it should move in order to track the object, what zoom level to use, etc.

A user may define areas of particular interest, often referred to as "prioritized zones", in the overview, or areas of less or no interest, correspondingly referred to as "exclude zones" for the latter case. Objects located near the edge of the overview image could have a higher priority, in particular if they have not been detected previously. Another parameter, which could be combined with other parameters, is the object velocity. The velocity could be used to help characterizing an object, e.g. a large object travelling at 50 km/h is likely to be a car. If an object seemingly is leaving the imaged view its priority may rise so that a close-up view is obtained, and a fast moving object or a slow moving object may be of particular interest depending on the situation. If more advanced recognition algorithms are employed, such as one of many neural networks configured for various types of recognition tasks, the parameters may be extended to specified individuals, car models, animals, actions performed by individuals, objects of various types, etc. Also, different parameters may be combined, and do not have to be static in the entire surveillance scene. An example of this is that a person near a building entrance (object class + object position) may have a lower priority than a person near a tunnel entrance (object class + object position), and vice versa if the object is a car instead of a person. A user defined priority profile may thus be tailormade for each surveillance situation, and the profile may also define the actions taken for each priority level. One example could be that an object having the highest priority should be visible in the PTZ-camera view at least once every 30 seconds or at least for 10 seconds every visit, etc.

When a detected object moves, this will be registered by the overview camera and the updated positional information will be sent to the control unit, and the list will be updated accordingly. If the object moves when in the view of the PTZ-camera, auto-tracking algorithms of the PTZ-camera may be selected to control the tracking, yet the preferred solution would be to use the object data received from the overview camera for tracking purposes.

In the above example the first and second object are individual objects, yet the invention may also be applied to superobjects, which corresponds to "a group of two or more objects that could be imaged in the same view of the PTZ-camera". In such an example the control unit may be configured to derive a superobject including both objects 112, 114, i.e. both a position and a size for the resulting superobject. The superobject may be combination of the two (or more) sets of object data concerning at least position and size, and the parameters of the superobject is based on the estimated size of the combination of the two objects, as defined by a geometrical shape extending over both objects, and any intermediate space. The geometrical shape may be a rectangle or other polygon of a size that may cover the two or more objects. The position defining the superobject may be geometrical center of the superobject. Since the goal is to find a suitable setting for a PTZ-camera the geometrical shape may mimic a rectangle having an aspect ratio of the PTZ-camera imaging system.

In a following step the control unit is configured to access data concerning the PTZ-camera, and use the data in combination with the superobject and the position of the superobject to determine if the PTZ-camera may be arranged in a pan position and tilt position, and with a zoom setting, such as to image the superobject.

Understandably, if the concept of superobjects is used a superobject will be treated as an individual object for the purposes of the present invention, with the possible difference that the priority setting will be slightly more complex. A superobject is mainly defined by the position of the objects, and consequently other parameters of objects included in a superobject may differ, as may the individual priority setting. A pragmatic solution is to give the superobject the same priority setting as the most "important" object contained therein. Another approach could be to use a mean priority setting (the mean of all objects included in the superobject), or to add the number of objects included as a parameter.

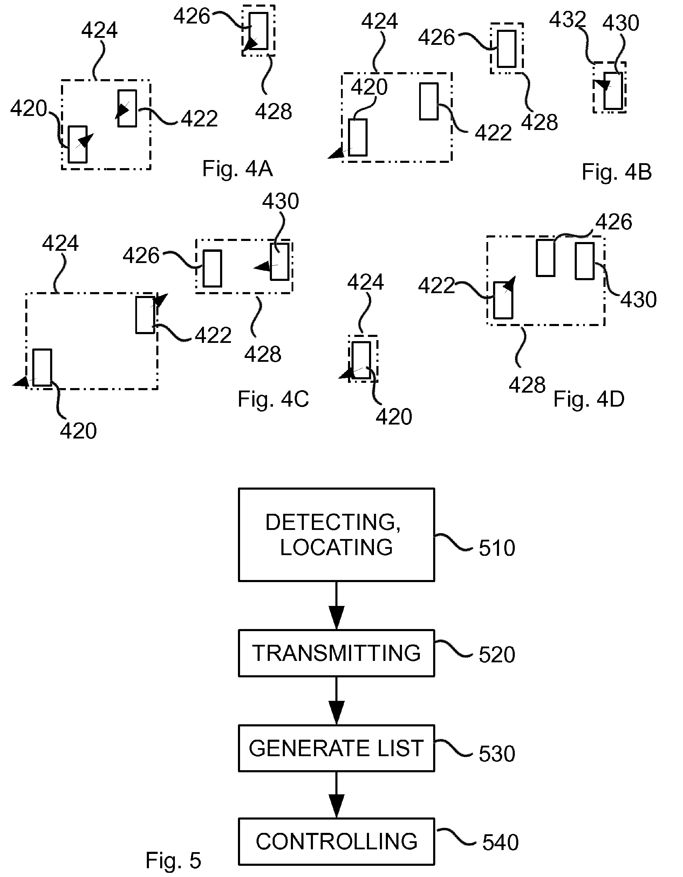

The introduction of superobjects may add a layer of complexity to the method, and how superobjects is defined in a scene comprising several objects may vary. In a simplified approach the generation of superobjects is defined by that two objects may be combined to a superobject given that they are close enough. Neither object in isolation may form part of another superobject unless it is preceded by the two objects move so far apart that they are no longer defined as a superobject. In this way, the amount of calculations necessary are kept at a minimum, and an inertia is introduced into the method. Further to this, superobjects will not shift between video frames, which is to the benefit of an operator, e.g. in the embodiments where a guard-tour has been set up automatically. In the following, Figs. 4A-C will be used to explain a situation where this simplified approach is applied to a practical case.

In the drawings objects are indicated by rectangles drawn in full lines, superobjects by rectangles drawn in dash-dotted lines, and any direction of movement by arrows. Starting with Fig. 4A there are three objects detected in the scene to begin with. A first object 420 and a second object 422 has already been defined as a first superobject 424. There is also a third object 426, which is too far away from the first superobject 424 to be associated with the same, and thus it may be defined as a second superobject 428. In this case the superobject and the object may coincide, and the definition of a superobject may be skipped altogether. The resulting guard tour list would have two positions to stop at. In the subsequent view of Fig. 4B the three objects have moved slightly. The first object 420 has started to distance itself from the second object 422, and a fourth object 430 has entered the scene. The fourth object 430 is too far away from the third object 426 to join the same superobject 428, so it forms a superobject 432 on its own. Now, the guard tour would have three items in its list, to cover the four individual objects in the scene. In the next sequential view, of Fig. 4C the third and fourth object are close enough to be joined into a single superobject 428, which is done. The second object 422 is close enough to join the same superobject 428, yet since it is already part of a previous superobject 424 extending beyond the range of the superobject 428 it will not. The list defining the guard tour has two items at the present time; two superobjects, each containing two individual objects. Finally, in the fourth view the first object 420 and the second object 422 have departed so far that they can no longer be defined by the same superobject 424, and there is a breakup. The second object 422 then joins the superobject 428. During this entire process a list is generated and a guard tour is executed, allowing for the operator to see or record close-up views of each object or superobject.

It is readily understood that the approach described above is far less complex than some of the other possible approaches, in that it follows less than a handful of prioritized rules.

Returning to the generalization of overview unit, an embodiment (not shown) dedicated for use of radar could be that several radar units with overlapping detection ranges cover a large area, while a PTZ-camera is arranged so as to be able to zoom in on most portions of the large area. One could imagine an area in which there are manmade or natural constructions covering a line of sight, rendering use of a single radar insufficient, or an area being larger than what is possible to cover by a single radar also making a single radar inadequate for full coverage. Furthermore, one could imagine the PTZ-camera being arranged on a pole or at another elevated position, so that it can look beyond the constructions obstructing the radar. An added benefit of using radar, or a positioning device having similar output, is that there will be a measure of the distance from the PTZ-camera to the object or objects. Based on this information the control unit may automatically adjust the PTZ-camera to a suitable focus setting and depth of field setting very quickly, even before the objects have entered the field of view of the PTZ-camera

Fig. 5 is a flow chart disclosing a general outline of an inventive method according to one embodiment thereof. According to the method for tracking moving objects in the scene one or more objects are detected 510 using a first and second overview unit. Data concerning the detected one or more objects is transmitted 520 to a control unit, which generates a list 530 introducing the possibility of controlling 540, with the control unit, the PT-camera to assume the correct pan/tilt/zoom position for such close-up in a set order according to a priority setting.

## Claims

1. A system for tracking moving objects in a scene, comprising
a first overview unit arranged to capture a first overview of a first portion of a scene,
a second overview unit arranged to capture a second overview of a second portion of a scene, wherein the first portion and the second portion may be partly overlapping, and
a PT-camera, able to pan/tilt, so as to image selected objects in the first or second portion of the scene,
wherein the first and the second overview unit are configured to detect and locate moving objects in the scene, and to transmit object data of said moving objects to a control unit, said object data at least including a position of each object,
**characterized in that** the control unit is configured
to receive object data concerning at least two objects present in the scene,
to transform portions of the object data,
from the transformed portion of object data; to generate a list of pan, tilt positions for the PT-camera, each item in the list corresponding to a position of at least one of said at least two objects in the scene, in a coordinate system of the PT-camera, and
to control the PT-camera to image each item of the list in a specific order.

2. The system of claim 1, wherein the PT-camera is a PTZ-camera having a zoom capability, enabling optical zoom, and wherein the generated list also includes a zoom level.

3. The system of claim 1 or 2, wherein the object data further comprises a measure of object size.

4. The system of any preceding claim, wherein the object data comprises a measure of object velocity or of object position as a function of time, and wherein the control unit is configured to utilize the data to extrapolate a position for the object.

5. The system of any preceding claim, wherein the object data also includes further features of the detected object, the features comprising:
object class, object subclass, object tracking identity, object attributes, object type, and combinations thereof.

6. The system of any preceding claim, wherein the control unit is configured to assign priority setting to each detected object, based on the object data, and to generate the list in accordance with the priority setting.

7. The system of claim 6, wherein the priority setting may be based on object position, object velocity, object size, object type, object class, a time duration since detection, or a combination thereof.

8. The system of any preceding claim, wherein the object data is used as input to determine if two or more detected objects may be imaged using a single view of the PT-camera, and to
define a superobject including said two or more objects, and to
add a position of said superobject as one item in the list.

9. The system of claim 8, wherein the PT-camera is a PTZ-camera, and wherein the control unit utilizes a minimum zoom level or a user defined zoom level of the PTZ-camera when determining if the object detected with the first overview unit and the object detected with the second camera may be imaged in a single view of the PTZ-camera.

10. The system of claim 8 or 9, wherein the superobject has a center point defined by a common center point corresponding to a geometrical center point of the objects included in the superobject.

11. The system of any one of claims 8-10, wherein a center point of the superobject is defined using the size and position of the objects included in the superobject, and wherein the control unit is configured to direct the PT camera to the center point.

12. The system of any preceding claim 8-11, wherein the first overview unit and the second overview unit continuously transmits positional data of detected objects to the control unit, so that the control unit may continuously adjust pan, tilt and zoom settings of the PTZ-camera for each object or superobject.

13. The system of any preceding claim 8-12, wherein a priority setting for the superobject is based on the priority setting of the objects contained therein, i.e. based on object position, object velocity, object size, object type, object class, a time duration since detection, or a combination thereof, for the objects contained therein, and wherein each superobject is defined as an individual item in the list of the PTZ-camera.

14. The system of any preceding claim, wherein one or both of the overview units is an overview camera, a radar unit, or a LIDAR unit.

15. A method for tracking moving objects in a scene with a system comprising a first and a second overview unit and a PT camera, comprising:
- detecting and locating a first object with the first or the second overview unit and a second object with the first or second overview unit,
- transmitting object data of the detected objects from the first and/or the second overview unit to a control unit,
- in the control unit, transforming a portion of the object data from the coordinate system of the overview unit to the coordinate system of the PT camera,
- generating a list from the transformed object data, the list comprising positional data for detected objects, in the coordinate system of the PT camera,
- controlling the PT camera to image each item in the list in a specific order.
